# FASCICULE DE BREVET EUROPEEN

(11) **EP 3 493 458 B1**
(45) Date de publication et mention de la délivrance du brevet: **07.09.2022**
(21) Numéro de dépôt: 18209454.0
(22) Date de dépôt: 30.11.2018
(51) Int. Cl.: H04L 9/06

(54) **PROCÉDÉ ET SYSTÈME DE CHIFFREMENT/DÉCHIFFREMENT DE DONNÉES À ULTRA FAIBLE LATENCE À DES FINS DE STOCKAGE ET/OU DE COMMUNICATION DE DONNÉES SÉCURISÉS**
VERFAHREN UND SYSTEM ZUM CHIFFRIEREN/DECHIFFRIEREN VON DATEN MIT ULTRANIEDRIGER LATENZZEIT ZUM SPEICHERN UND/ODER KOMMUNIZIEREN VON GESICHERTEN DATEN
METHOD AND SYSTEM FOR ENCRYPTION/DECRYPTION OF DATA WITH GREATLY REDUCED LATENCY FOR THE PURPOSE OF STORAGE AND/OR COMMUNICATION OF SECURE DATA

(30) Priorité: 30.11.2017 FR 1771292
(43) Date de publication de la demande: 05.06.2019
(73) Titulaire: IPception, 78180 Montigny-le-Bretonneux (FR)
(72) Inventeur: Jacotin, Romain, 78180 MONTIGNY-LE-BRETONNEUX (FR)
(74) Mandataire: Nicolle, Olivier

(56) Documents cités:
- Guido Bertoni ET AL: "Keccak and the SHA-3 Standardization", , 6 février 2013 (2013-02-06), XP055335678, Extrait de l'Internet: URL:http://csrc.nist.gov/groups/ST/hash/sh a-3/documents/Keccak-slides-at-NIST.pdf
- Joan Daemen ET AL: "Permutation-based encryption, authentication and authenticated encryption Joint work with", DIAC - Directions in Authenticated Ciphers 2012, 5 juillet 2012 (2012-07-05), XP055213223, Stockholm, Sweden Extrait de l'Internet: URL:http://www.hyperelliptic.org/DIAC/slid es/PermutationDIAC2012.pdf [extrait le 2015-09-14]
- BART MENNINK ET AL: "Security of Full-State Keyed Sponge and Duplex: Applications to Authenticated Encryption", INTERNATIONAL ASSOCIATION FOR CRYPTOLOGIC RESEARCH,, vol. 20150923:154002, 23 septembre 2015 (2015-09-23), pages 1-28, XP061019331,
- "Chapter 6: Stream Ciphers ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 191 - 222 , 1 octobre 1996 (1996-10-01), XP001525006, ISBN: 978-0-8493-8523-0 Extrait de l'Internet: URL:http://www.cacr.math.uwaterloo.ca/hac/
- GLENN FOWLER GOOGLE LANDON CURT NOLL CISCO SYSTEMS KIEM-PHONG VO GOOGLE DONALD EASTLAKE HUAWEI TECHNOLOGIES TONY HANSEN AT&T LABOR: "The FNV Non-Cryptographic Hash Algorithm <>; draft-eastlake-fnv-13.txt", THE FNV NON-CRYPTOGRAPHIC HASH ALGORITHM <>; DRAFT-EASTLAKE-FNV-13.TXT; INTERNET-DRAFT: NETWORK WORKING GROUP, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 13, 9 juin 2017 (2017-06-09), pages 1-119, XP015120013, [extrait le 2017-06-09]
- MAUW SJOUKE ET AL: "Security Protocols for Secret Santa", 24 March 2010 (2010-03-24), ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 175 - 184, XP047296963, ISBN: 978-3-540-74549-5
- White Matthew: "The Secret Santa Problem The Secret Santa Problem The Secret Santa Problem", Rose-Hulman Undergraduate Mathematics Journal, 1 January 2006 (2006-01-01), pages 1-23, XP055907591, Retrieved from the Internet: URL:https://scholar.rose-hulman.edu/cgi/vi ewcontent.cgi?article=1226&context=rhumj [retrieved on 2022-03-31]
- RYAN PETER Y ED - LEE SEONG-WHAN ET AL: "Crypto Santa", 18 March 2016 (2016-03-18), ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 543 - 549, XP047357313, ISBN: 978-3-540-74549-5 [retrieved on 2016-03-18]

## Description

La présente invention concerne d'une manière générale le chiffrement/déchiffrement de données à ultra faible latence. Plus particulièrement, elle concerne le domaine de la cryptographie, à savoir la confidentialité par le chiffrement de données informatiques binaires à des fins de stockage et/ou de communication sécurisés.

Elle trouve une application générale quel que soit le moyen et la méthode de stockage utilisés ou le support de communication utilisé (mécanique, électrique, optique, magnétique, électromagnétique, diélectrique, chimique, et d'une façon générale tout support de communication basé sur un comportement ondulatoire, radiofréquence, NFC, RFID, filaire, sans fil ou analogue). De même, elle s'applique quel que soit le lieu utilisé : sur une planète (ou un satellite), ou en son intérieur (sous terre), dans les mers et océans quel que soit la profondeur, dans l'atmosphère gazeuse quel que soit l'altitude, ou dans l'espace.

On connait déjà la cryptographie symétrique appelée encore « cryptographie à clef secrète » dans laquelle une information secrète est partagée entre deux entités qui communiquent entre elles. Dans un monde idéal, la résistance d'un procédé cryptographique symétrique est mesurable uniquement par la sécurité calculatoire, c'est-à-dire qu'il faut que la clé secrète partagée puisse prendre suffisamment de valeurs différentes pour qu'une attaque exhaustive par essai systématique de toutes les clés soit beaucoup trop longue pour être menée à bien. Bien évidemment, la sécurité calculatoire s'altère avec le progrès technique, et la puissance croissante des moyens de calcul la fait reculer constamment.

En cryptographie symétrique à clef secrète, on connaît déjà un algorithme de chiffrement considéré comme parfaitement sûr. Il s'agit du chiffrement dit « de Vernam », appelé encore «masque binaire jetable» pour souligner le fait que la clé secrète est à usage unique.

L'inconvénient du chiffrement de « Vernam » est que, pour chiffrer un message de m bits, il faut au préalable avoir échangé une clé secrète également de m bits avec le destinataire du message, et cela par une voie absolument sûre, sinon chiffrer devient inutile.

La solution actuelle pour remédier au problème d'échange préalable de clef secrète/masque binaire jetable consiste à utiliser des fonctions pseudoaléatoire à base de fonctions de hash cryptographiques (appelé en anglosaxon « Secure Hash Algorithm ») de manière à ce que les deux entités communicantes soient capables de simuler une suite pseudo-aléatoire identique pour les opérations de chiffrement/déchiffrement de messages.

Néanmoins, les fonctions de chiffrement et d'authentification à base de fonctions hash cryptographiques présentent de nombreux défauts et faiblesses. Tout d'abord, par nature, elles sont reproductibles, prédictibles et pré-calculables. De plus des techniques variées existent pour les casser. En outre, les fonctions hash cryptographiques sont très couteuses en temps de calcul et donc induisent beaucoup de latence car finalement ces fonctions essayent de simuler un système chaotique tel que défini par Lorenz (théorie du chaos) de manière à ce qu'une infime variation de paramètre à un moment donné puisse faire varier énormément le résultat final (c'est-à-dire le résultat chiffré dans le cas du chiffrement).

Par ailleurs, l'histoire de la cryptographie symétrique montre que la résistance des algorithmes à base de fonctions de hash cryptographiques n'est pas seulement basée sur leur sécurité calculatoire mais est malheureusement également liée à leurs défauts de conception.

Il en résulte que toute tentative de chiffrement basé sur la création d'une suite pseudo aléatoire à base de fonction de hash cryptographique implique une robustesse inférieure à la sécurité calculatoire recherchée (c'est-à-dire la taille de la clef secrète partagée). Par ailleurs cette robustesse inférieure est indémontrable. En conséquence, les solutions connues à base de hash cryptographiques sont à bannir et une voie nouvelle doit être utilisée.

Enfin, on connaît aussi la fonction éponge telle que utilisée par « Keccak et SHA-3 standardization » qui consiste à d'utiliser les résultats précédemment générés pour pouvoir permuter différemment les prochaines données (principe d'absorption et d'essorage d'une fonction éponge). Les défauts sécuritaires de ce type d'approche sont de nécessiter des registres d'états dans la fonction éponge et de laisser fuiter des informations sur les données utilisées par ce principe de chainage des données entre l'entrée et la sortie de la fonction. De plus l'altération d'un seul bit de données chiffrées altère tout le reste de la séquence à déchiffrer qui suit à cause de ce chainage de bit de la sortie vers l'entrée de la fonction éponge. (Guido Bertoni et AI : « keccak and the SHA-3 standardization », 6 Février 2013 (URL: http://csrc.nist.gov/groups/ST/hash/sha-3/documents/keccaki-slides-artnist.pdf)). Il est connu aussi de l'état de l'art les documents suivant: Joan Daemen ET AL: "Permutation-based encryption, authentication and authenticated encryption" 05-07-2012. Et traitant du sujet des dérangements: MAUW SJOUKE ET AL: "Security Protocols for Secret Santa", 24 mars 2010. White Matthew: "The Secret Santa Problem" 2006. RYAN PETER Y ED - LEE SEONG-WHAN ET AL: "Crypto Santa", 18 mars 2016.

La présente invention apporte justement une solution qui améliore la situation en cryptographie symétrique à des fins de stockage et/ou de communication de données sécurisés.

Elle porte sur un procédé de chiffrement symétrique asynchrone sans chaînage d'un message initial en clair de N blocs successifs de m bits chacun de données brutes mis en œuvre entre une entité émettrice et une entité réceptrice.

Selon une définition générale de l'invention, pour chaque bloc de m bits, il est prévu les étapes suivantes :
- générer un masque aléatoire jetable de m bits ;
- appliquer une opération OU exclusif (XOR) entre le bloc de données brutes à chiffrer et le masque aléatoire ainsi généré pour obtenir un bloc chiffré primaire de m bits, dans lequel la taille m des blocs chiffrés est un multiple de 2 ; et
- appliquer une permutation de bits sur la concaténation du masque aléatoire jetable et du bloc chiffré primaire pour obtenir un bloc chiffré secondaire de 2 * m bits, la permutation étant secrète, uniquement partagée et connue des entités émettrice et réceptrice, et sensiblement sans point fixe.

Le procédé de cryptographie symétrique conforme à l'invention a l'avantage d'utiliser un chiffrement de « Vernam » pour chiffrer les données en clair avec un masque aléatoire jetable dans lequel les échanges n'utilisent pas de fonctions de hash cryptographique. En outre, les opérations de traitement sont rapides, simples, de très faible latence. L'implémentation matérielle est parallélélisable pour chaque bloc du message à traiter par les entités émettrice et réceptrice et nécessite peu de transistors et donc une faible consommation électrique, la rendant ainsi idéale pour les systèmes informatiques en temps réel et/ou embarqués. Enfin, le procédé de cryptographie conforme à l'invention respecte et conserve le principe originel de la sécurité parfaite et donc une résistance associée basée uniquement sur la sécurité calculatoire ainsi qu'une résistance aux algorithmes des ordinateurs quantiques grâce à une non utilisation de la théorie des nombres.

De plus, le procédé conforme à l'invention est asynchrone, ce qui permet de traiter tout message indépendamment de l'ordre et de la réception des messages précédents. Ainsi, le procédé conforme à l'invention n'utilise aucun registres d'états au sein de la fonction de permutation, contrairement aux fonctions éponges ( Keccak et SHA-3 standarsization) et n'utilise pas du tout le principe de fonction éponge. Il est donc totalement asynchrone sans chainage entre les données en entrée et en sortie ce qui permet le déchiffrement des données correctement reçues d'une séquence altérée car seules les bits modifiés impactent les données associés mais n'empêchent pas le bon déchiffrement des données qui suivent ensuite. Il utilise ainsi une seule itération de sa permutation qui est un réarrangement de l'ordre des bits, sans changer la valeur de ceux-ci, au contraire des fonctions éponges qui opèrent des itérations de leur permutation, tout en modifiant la valeur des bits à chaque permutation.

A titre explicatif, on va utiliser ici les quatre personnages classiques de la cryptographie pour décrire le procédé de cryptographie conforme à l'invention et les avantages qu'il confère:
- Alice veut envoyer un message chiffré à Bob;
- Bob veut déchiffrer le message reçu d'Alice;
- Eve est une attaquante passive qui peut écouter les messages échangés entre Bob et Alice sans les modifier;
- Mallory est une attaquante active qui peut écouter mais aussi modifier, dupliquer ou supprimer les messages échangés entre Alice et Bob. Alice et Bob possèdent en outre un secret partagé par eux seuls et donc inconnu de Eve et Mallory.

La solution technique conforme à l'invention utilise les cinq axiomes suivants :
a) **Axiome 1** : Une chaine binaire aléatoire formant ici le « masque jetable aléatoire » est par définition imprédictible, et non prévisible;
b) **Axiome 2** : Le moyen le plus efficace pour Alice de générer une chaine binaire aléatoire imprédictible (masque jetable aléatoire) tant pour Bob que par les observateurs de l'échange Eve et Mallory est d'utiliser un générateur aléatoire reposant sur l'observation de phénomènes physiques, ou idéalement sur des phénomènes quantiques (voir paradoxe de Schrödinger). Toutefois, l'usage d'un générateur de chaine binaire pseudo-aléatoire reste possible sous réserve que la graine d'initialisation utilisée ne dépende pas du secret partagé avec Bob, et soit donc totalement inconnu de Bob, Eve et Mallory ;
c) **Axiome 3** : Soit ⊕ l'opérateur OU exclusif (acronyme XOR en anglo- saxon). Soit T un message binaire à chiffrer composé de m bits et MA une chaine binaire aléatoire composée de m bits. R le résultat (appelé ici bloc chiffré primaire) de la fonction OU exclusif (XOR) avec les opérandes T et MA est une chaine aléatoire de m bits (R est donc imprédictible selon **l'axiome 1,** la sécurité du chiffrement de Vernam reste parfaite tant que MA est aléatoire): R = T ⊕ MA;
d) **Axiome 4** : Soit ∥ l'opérateur de concaténation. R la concaténation de deux chaines binaires aléatoires X et Y de taille quelconque est une nouvelle chaine binaire aléatoire (R est donc imprédictible selon **l'axiome 1,** si X et Y sont également imprédictibles): R = X ∥ Y;
e) **Axiome 5** : Soit Z une chaine aléatoire binaire quelconque composée de m bits, et PE une permutation arbitraire quelconque de m éléments, le résultat de la permutation de la chaine binaire Z par la permutation de bits PE est également une chaine aléatoire binaire.

Le principe de la solution technique conforme à l'invention consiste à faire l'inverse du principe de Kerckhoffs (appelé encore maxime de Shannon) dans lequel Alice communique à Bob, pour chaque message émis, le secret aléatoire à utiliser pour déchiffrer ce message mais garde secret le système de chiffrement lui-même. A l'inverse ici, le secret commun partagé entre Alice et Bob est la méthode de chiffrement (le système de chiffrement) qui sera utilisée de manière identique et systématique pour chaque message. On verra plus après que cette méthode de chiffrement est une permutation de bits.

Dans la solution conforme à l'invention, la clef de chiffrement de chaque message est ici totalement aléatoire et à usage unique (appelé encore masque aléatoire jetable pour chaque message) et totalement inconnu et imprévisible pour Bob, Eve et Mallory. Pour chaque message reçu d'Alice, Bob a désormais besoin de connaitre la clef aléatoire à utiliser pour déchiffrer. La solution utilisée est qu'Alice communique ensemble le message chiffré de Vernam (appelé ici message chiffré primaire) plus la clef de chiffrement (appelé ici masque aléatoire jetable). La solution conforme à l'invention double la taille des messages émis mais permet d'offrir un chiffrement parfait totalement imprédictible.

Comme Eve et Mallory savent qu'un message émis contient à la fois la clef de chiffrement (masque aléatoire) et le message chiffré primaire (qui est un simple OU exclusif (XOR) entre le texte à chiffrer et la clef de chiffrement), c'est alors que le secret partagé entre Alice et Bob entre en jeu en ajoutant de la confusion au message émis. Cette confusion est ici une simple permutation de bits sur la concaténation de la clef de chiffrement et du message chiffré primaire afin d'obtenir le chiffré secondaire.

Par nature, la clef de chiffrement de chaque message est aléatoire (chaque bit à autant de chance de valoir 0 ou 1), et donc le texte chiffré primaire est également aléatoire par nature (un XOR appliqué entre un texte et une chaine aléatoire donne en résultat également une chaine de bits aléatoire où chaque bit à autant de chance de valoir 0 ou 1). La confusion apportée par la permutation suffit à casser la relation qui existe entre la clef de chiffrement et le texte chiffré primaire.

Avantageusement, il n'est pas nécessaire de changer de permutation de bits pour chaque message, car c'est le caractère aléatoire et donc statistiquement unique de chaque clef de chiffrement qui protège l'intégralité du système.

Selon des modes particuliers de réalisation, le procédé de chiffrement comporte une ou plusieurs caractéristiques suivantes, prise(s) isolément ou suivant toutes les combinaisons techniquement possibles :
- la taille m des blocs est un multiple de 2 ;
- la permutation est sensiblement sans point fixe ;
- le procédé de chiffrement comprend en outre une étape préalable de communication secrète de la permutation à destination de l'entité réceptrice et de l'entité émettrice.

La présente invention a également pour objet un procédé de déchiffrement symétrique asynchrone sans chaînage d'un message chiffré de données brutes entre une entité émettrice et une entité réceptrice.

Selon un autre aspect de l'invention, le procédé de déchiffrement comprend les étapes suivantes :
- recevoir un bloc chiffré secondaire de 2 * m bits chiffré selon le procédé de chiffrement conforme à l'invention ;
- appliquer une permutation inverse sur le bloc chiffré secondaire ainsi reçu pour obtenir la dé-concaténation d'un masque aléatoire de m bits et d'un bloc chiffré primaire de m bits ;
- appliquer une opération OU exclusif (XOR) entre le bloc chiffré primaire et le masque aléatoire ainsi dé-concaténés pour obtenir un bloc en clair de m bits, la permutation inverse étant secrète et uniquement partagée et connue des entités émettrice et réceptrice, et sensiblement sans point fixe.

La présente invention a encore pour objet un système de chiffrement/déchiffrement symétrique asynchrone sans chaînage d'un message initial en clair de N blocs successifs de m bits chacun de données brutes entre une entité émettrice et une entité réceptrice, l'entité émettrice étant adaptée pour :
- générer un masque aléatoire de m bits ;
- appliquer une opération OU exclusif (XOR) entre le bloc de données brutes à chiffrer et le masque aléatoire ainsi généré pour obtenir un bloc chiffré primaire de m bits, dans lequel la taille m des blocs chiffrés est un multiple de 2 ; et
- appliquer une permutation sur la concaténation du masque aléatoire et du bloc chiffré primaire pour obtenir un bloc chiffré secondaire de 2 * m bits,
tandis que l'entité réceptrice est adaptée pour :
- recevoir le bloc chiffré secondaire de 2 * m bits en provenance de l'entité émettrice;
- appliquer une permutation inverse sur le bloc chiffré secondaire ainsi reçu pour obtenir la dé-concaténation d'un masque aléatoire et d'un bloc chiffré primaire de m bits ; et
- appliquer une opération OU exclusif (XOR) entre le bloc chiffré primaire et le masque aléatoire ainsi dé-concaténés pour obtenir un bloc en clair de m bits, la permutation et sa permutation inverse étant secrètes et uniquement partagées et connues des entités émettrice et réceptrice, et sensiblement sans point fixe.

En pratique, l'entité émettrice ou réceptrice est du type comprenant des circuits logiques fixes ou programmables à base de transistors et diodes.

La présente invention a encore pour objet un programme d'ordinateur caractérisé en ce qu'il comprend des instructions pour mettre en œuvre par un processeur le procédé de chiffrement et/ou le procédé de déchiffrement conforme à l'invention lorsque ledit programme d'ordinateur est exécuté par ledit processeur.

D'autres caractéristiques et avantages de l'invention apparaîtront à la lumière de la description et des dessins dans lesquels :
- la **figure 1** est un organigramme illustrant les étapes du procédé de chiffrement conforme à l'invention ;
- la **figure 2** est un organigramme illustrant les étapes du procédé de déchiffrement conforme à l'invention ;
- la **figure 3** est un organigramme illustrant les étapes du procédé de chiffrement par bloc dans lequel le dernier bloc du message à une taille 25 identique à celle du bloc ;
- la **figure 4** est un organigramme illustrant les étapes du procédé de chiffrement par bloc dans lequel le dernier bloc du message à une taille inférieure à celle du bloc ;
- la **figure 5** est un organigramme illustrant les étapes du procédé de déchiffrement conforme à l'invention dans lequel le dernier bloc du message à une taille identique à celle du bloc ;
- la **figure 6** est un organigramme illustrant les étapes du procédé de déchiffrement conforme à l'invention dans lequel le dernier bloc du message à une taille inférieure à celle du bloc ;
- la **figure 7** illustre schématiquement le procédé de chiffrement/déchiffrement de données stockées sur une mémoire rémanente, non volatile ou analogue ;
- la **figure 8** illustre schématiquement la communication de données chiffrées entre deux entités ;
- la **figure 9** illustre schématiquement la communication de données chiffrées entre deux entités avec décision au préalable de l'entité qui utilise la permutation inverse; et
- les **figures 10 à 13** illustrent des exemples de messages chiffrées/déchiffrées conforment à l'invention.

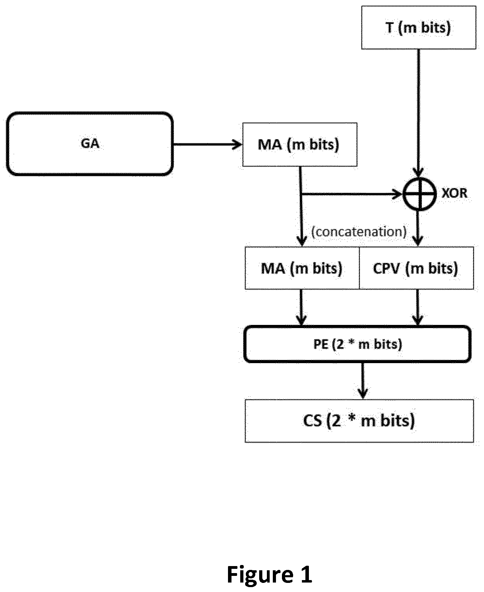

En référence à la **figure 1****,** un message initial en clair T à chiffrer est de de m bits de données brutes. Un générateur aléatoire GA génère un masque aléatoire MA de m bits. Par exemple, le générateur aléatoire est basé sur l'observation d'un phénomène physique. En variante, le générateur GA peut être de type quasi ou pseudo-aléatoire.

Le masque aléatoire MA de m bits est généré pour chaque nouveau message T à chiffrer. Comme décrit ci-avant, c'est le masque aléatoire MA qui va jouer le rôle de clef de chiffrement.

Une opération OU exclusif (XOR) est alors appliquée entre le message en clair T à chiffrer et le masque aléatoire MA ainsi généré pour obtenir un message chiffré primaire CPV de m bits. Comme décrit ci-avant le message chiffré primaire CPV est un chiffré de « Vernam » avec les qualités décrites ci-avant qui en découlent.

Enfin, une permutation de bits PE est appliquée sur la concaténation du masque aléatoire MA de m bits et du bloc chiffré primaire CPV de m bits pour obtenir un message chiffré secondaire CS de 2 * m bits (deux fois m bits). La taille du message chiffré secondaire CS est donc double de celle du message T à chiffrer.

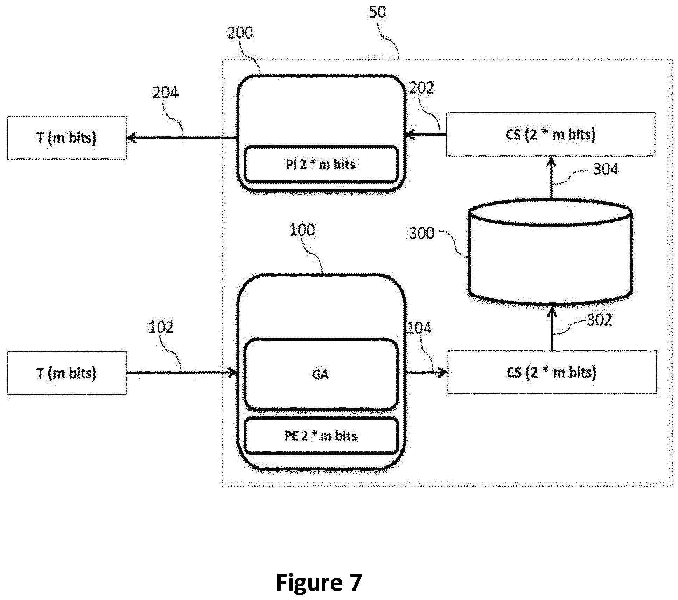

La permutation de bits PE est secrète et uniquement partagée et connue des entités émettrice et réceptrice que l'on décrira plus en détail ci-après en référence aux **figures 7 à 9****.**

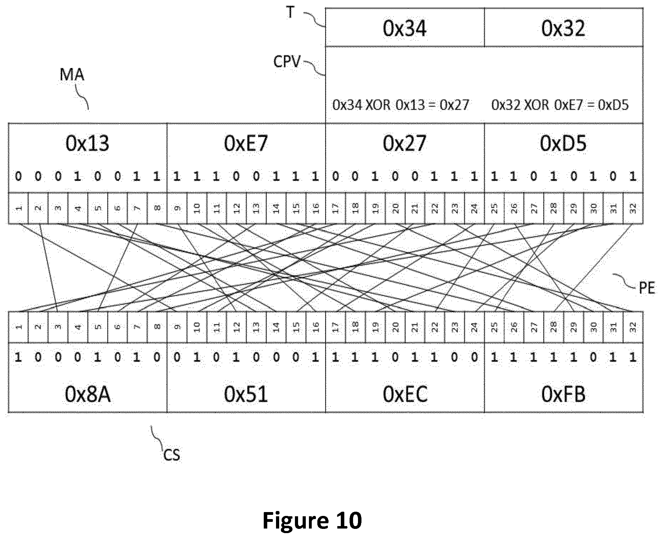

De préférence, la permutation de bits est sensiblement sans point fixe (dérangement). Des exemples de permutation de bits PE sont décrits en référence aux **figures 10 à 13****.**

La sécurité calculatoire du chiffrement dépend de la taille p de la permutation et du nombre de ses points fixes. Idéalement, il est préférable d'utiliser des permutations sans points fixes, appelés encore dérangements.

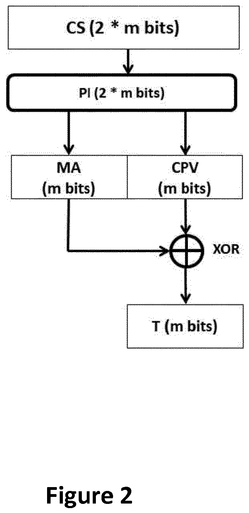

En référence à la **figure 2****,** on a décrit le procédé de déchiffrement antagoniste au procédé de chiffrement décrit en référence à la figure 1. Le message à déchiffrer est composé de 2 * m bits. Le secret partagé est une permutation de bits PE de taille 2 * m bits dont il faut utiliser la permutation inverse PI pour le déchiffrement. On applique ainsi une permutation inverse PI sur le bloc chiffré secondaire ainsi reçu pour obtenir la dé-concaténation d'un masque aléatoire de m bits MA et d'un bloc chiffré primaire CPV de m bits. On applique ensuite une opération OU exclusif (XOR) entre le bloc chiffré primaire CPV et le masque aléatoire MA ainsi dé-concaténés pour obtenir un bloc en clair T de m bits correspondant au message original de m bits.

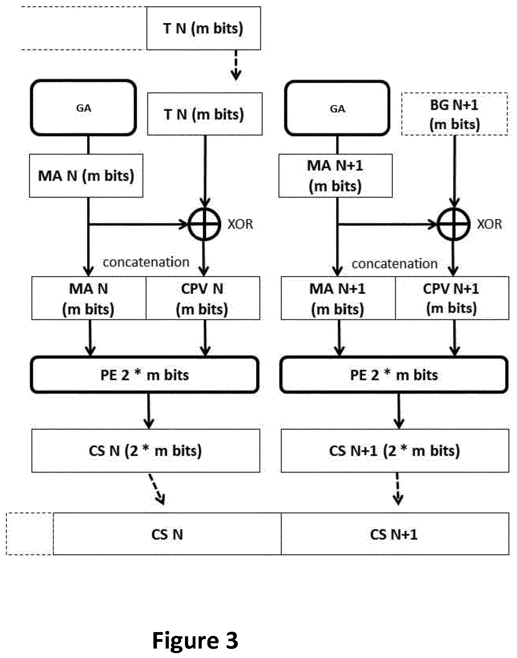

En référence à la **figure 3****,** on a représenté un chiffrement par bloc d'un message en clair composé de N blocs de m bits chacun. Ici, le dernier bloc N du message à chiffrer est de taille m bits. Dans cet exemple, un nouveau bloc N+1 est alors ajouté au message T à chiffrer.

Le traitement du bloc N est conforme à celui décrit en référence à la **figure 1** pour aboutir à un bloc chiffré secondaire CS N de 2 * m bits.

Le traitement du bloc N+1 consiste à créer un bloc de bourrage (remplissage) N+1 référencé ici BG N+1 constitué de un bit à valeur binaire 1 suivi de m-1 bits à valeur binaire 0. On applique alors le chiffrement du bloc BG N+1 selon le procédé conforme à la **figure 1** pour aboutir à un bloc chiffré secondaire CS N+1 de 2 * m bits qui constitue le dernier bloc du message chiffré.

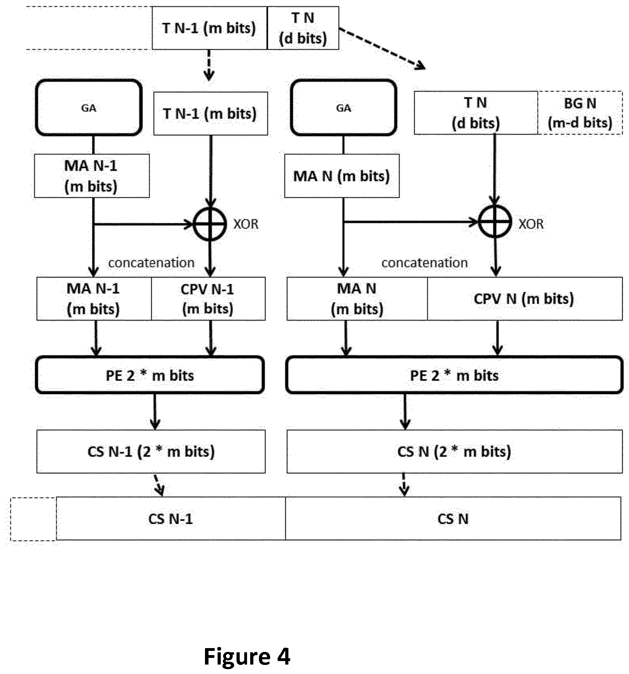

En référence à la **figure 4****,** on a représenté un chiffrement par bloc d'un message en clair composé de N blocs de m bits chacun dans lequel le dernier bloc N a une taille d inférieure à m bits. Dans cet exemple, on ajoute (bourrage ou remplissage) m-d bits au bloc N pour obtenir un bloc N de m bits. En pratique, le remplissage consiste à ajouter un bit de valeur binaire 1 suivi si nécessaire de plusieurs bits de valeur binaire 0. Ce bloc constitue le dernier bloc du message chiffré.

Le traitement du bloc N-1 est conforme à celui décrit en référence à la **figure 1** pour aboutir à un bloc chiffré secondaire CSN-1 de 2 * m bits.

Le traitement du bloc N consiste à chiffrer le bloc N ainsi rempli et référencé ici BG N. On applique alors le chiffrement du bloc BG N selon le procédé conforme à la **figure 1** pour aboutir à un bloc chiffré secondaire CS N de 2 * m bits.

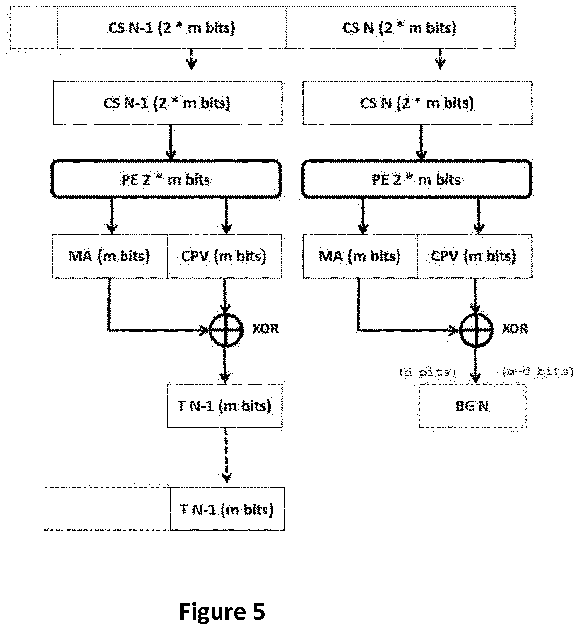

En référence à la **figure 5****,** on a décrit le procédé de déchiffrement antagoniste au procédé de chiffrement décrit en référence à la figure 3. Le message à déchiffrer est composé de N * 2 * m bits. Le secret partagé est une permutation de bits PE de taille 2 * m bits dont il faut utiliser la permutation inverse PI pour le déchiffrement.

Pour connaître la taille du message à déchiffrer, il convient de regarder dans le dernier bloc chiffré secondaire CS et chercher quel est le premier bit à valeur binaire 1 en partant de la fin. Si ce bit à 1 est le premier bit du bloc N alors le bloc précédent est le dernier bloc à déchiffrer. Ainsi, à partir d'un message chiffré composé de N * 2 * m bits, on obtient un message en clair 15 composé de N-1 blocs pour un total de (N-1) * m bits.

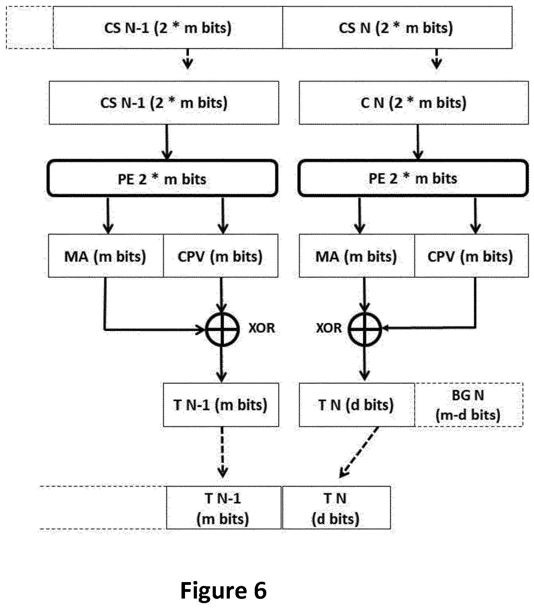

En référence à la **figure 6****,** on a décrit le procédé de déchiffrement antagoniste au procédé de chiffrement décrit en référence à la figure 4. Le message à déchiffrer est composé de N * 2 * m bits. Le secret partagé est une permutation de bits PE de taille 2 * m bits dont il faut utiliser la permutation inverse PI pour le déchiffrement.

Pour connaître la taille du message à déchiffrer, il convient de regarder dans le dernier bloc chiffré secondaire CS et chercher quel est le premier bit à valeur binaire 1 en partant de la fin. Si ce bit à 1 n'est pas le premier bit du bloc N alors tous les bits se trouvant à sa gauche constituent les derniers bits de données du message en clair, c'est-à-dire les d premiers bits du bloc N.

Ainsi à partir d'un message chiffré composé de N * 2 m bits, on obtient un message en clair composé de N blocs pour un total de (N-1) * m + d bits, avec d inférieur à m.

En référence à la **figure 7****,** on a représenté un module de traitement de données 50 destiné à être incorporé dans un système informatique à microprocesseur ou microcontrôleur et dans lequel le procédé de traitement conforme à l'invention est mis en œuvre sur une mémoire de type appartenant au groupe formé par une mémoire de masse, une mémoire rémanente, une mémoire volatile, une mémoire non volatile (disque dur, mémoire flash, bande magnétique, disque optique, memristor...) ou analogue.

En pratique, l'étape d'écriture dans la mémoire 300 consiste à recevoir un bloc de données en clair T de m bits et à l'appliquer 102 au dispositif de chiffrement 100 qui délivre en sortie 104 un bloc chiffré secondaire CS de 2 * m bits après permutation de bits PE de 2 * m bits. Le bloc secondaire CS est stocké via l'entrée 302 dans la mémoire 300.

Réciproquement, l'étape de lecture 304 dans la mémoire 300 consiste à lire un bloc de données chiffrées de 2 * m bits et à l'appliquer 202 au dispositif de déchiffrement 200 qui délivre en sortie 204 un bloc en clair T de m bits après permutation inverse PI de 2 * m bits.

Par exemple, l'architecture des dispositifs de chiffrement 100 et de déchiffrement 200 comprend un processeur, une mémoire et une interface de communication reliés à un ou plusieurs bus de données (non représentés).

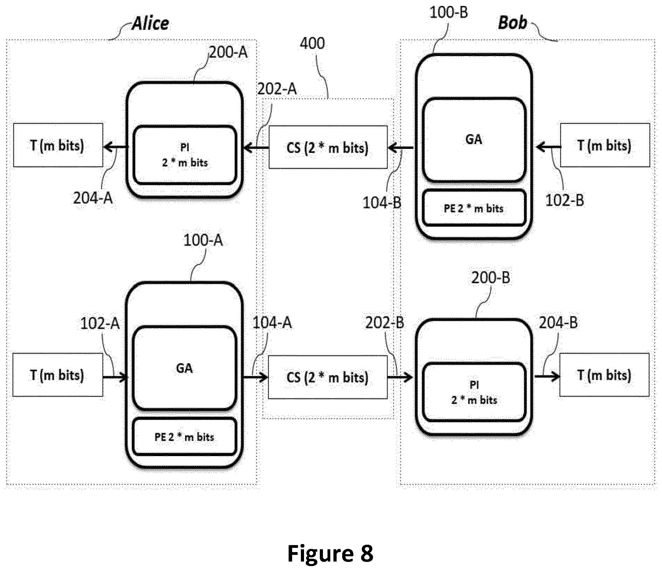

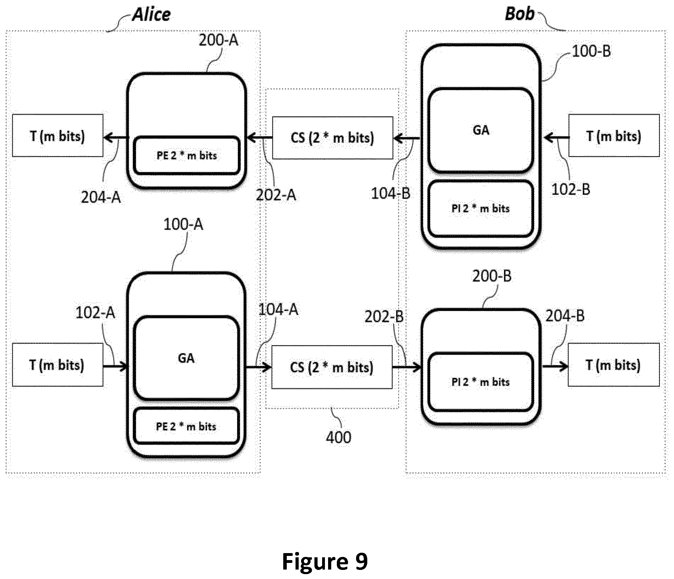

En référence aux **figures 8** **et** **9****,** on a représenté un canal de communication 400 pour échanger des données chiffrées entre deux entités, individualisées en ALICE et BOB.

En référence à la **figure 8****,** l'entité ALICE applique la permutation de bits PE au niveau du dispositif de chiffrement 100-A tandis que l'entité BOB applique sa permutation inverse PI au niveau du dispositif de déchiffrement 200-B pour l'échange de données chiffrées CS de ALICE vers BOB via le canal de communication 400. Réciproquement, l'entité BOB applique la permutation PE au niveau du dispositif de chiffrement 100-B tandis que l'entité ALICE applique sa permutation inverse PI au niveau du dispositif de déchiffrement 200-A pour l'échange de données chiffrées CS de BOB vers ALICE via le canal de communication 400.

Par exemple, le canal de communication 400 est de type optique, filaire, ou sans fil.

En référence à la **figure 9****,** on a représenté une alternative dans laquelle il est préalablement décidé que c'est ALICE qui utilisera la permutation PE aussi bien en chiffrement qu'en déchiffrement tandis que l'entité BOB utilisera uniquement la permutation inverse PI aussi bien en chiffrement qu'en déchiffrement.

En référence aux **figures 10 à 12****,** on a représenté des exemples de chiffrements à partir de blocs de 16 bits. En pratique, le procédé conforme à l'invention s'applique à des permutations de bits de taille multiple de 2.

Pour faciliter, la lecture les exemples sont donnés en codage Hexadécimal.

Le bloc T de 16 bits en clair est ici égal à 0x3432 en code Hexadécimal. Le masque aléatoire MA est égal à 0x13E7 en Hexadécimal. Le chiffré primaire CPV est égal à 0x27D5. Le chiffré secondaire est égal 0x8A51ECFB en Hexadécimal.

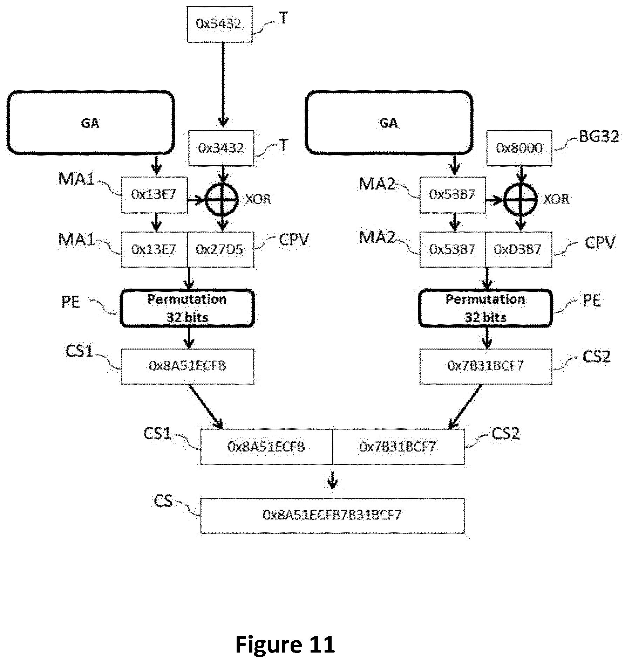

En appliquant un bourrage de 0x8000 (**figure 11**), le message chiffré secondaire est égal à 0x8A51ECFB7B31 BCF7 en Hexadécimal.

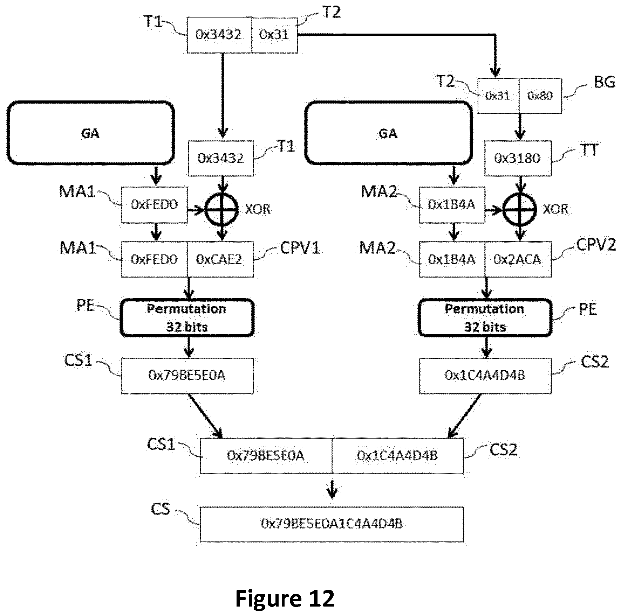

En appliquant un bourrage de 0x80 (**figure 12**) au bloc 0x31 le message chiffré secondaire CS est 0x79BE5E5E01C4A4D4B en Hexadécimal.

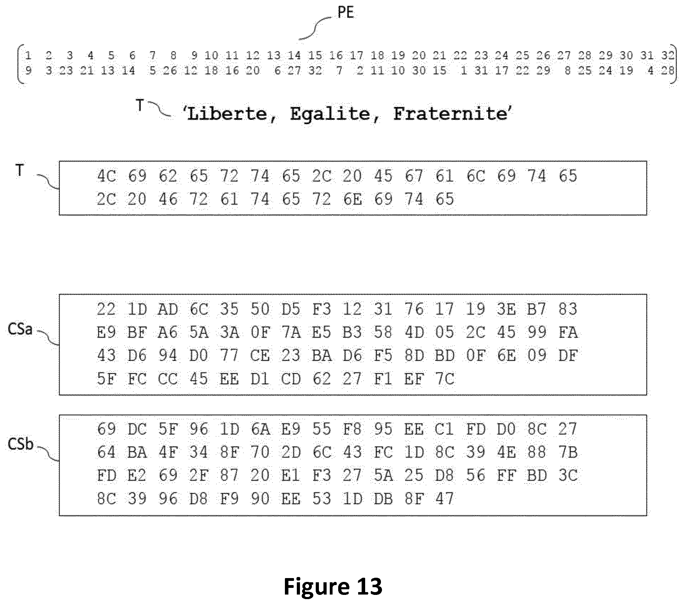

En référence à la **figure 13****,** on a représenté un exemple de message en clair T sur 28 octets correspondant au message en clair « Liberte Egalite Fraternite ». le procédé de chiffrement conforme à l'invention peut donner plusieurs messages chiffrés secondaires aléatoires différents CSa et CSb à partir d'une permutation de bits unique PE. Dans l'exemple de la **figure 13****,** la permutation est de taille 32 bits.

## Revendications

1. Procédé de chiffrement symétrique asynchrone sans chaînage d'un message initial en clair (T) de N blocs successifs de m bits chacun de données brutes mise en œuvre entre une entité émettrice (100) et une entité réceptrice (200), **caractérisé en ce que**, pour chaque bloc (T) de m bits à chiffrer, il est prévu les étapes suivantes:
- générer un masque aléatoire (MA) de m bits dans lequel la taille m des blocs à chiffrer (T) est un multiple de 2 ;
- appliquer une opération OU exclusif (XOR) entre le bloc de données brutes à chiffrer (T) et le masque aléatoire (MA) ainsi généré pour obtenir un bloc chiffré primaire (CPV) de m bits ; et
- appliquer une permutation de bits (PE) sur la concaténation du masque aléatoire (MA) et du bloc chiffré primaire (CPV) pour obtenir un bloc chiffré secondaire (CS) de 2 * m bits, la permutation (PE) étant secrète, uniquement partagée et connue des entités émettrice (100) et réceptrice (200) et sensiblement sans point fixe, de telle permutations sans point fixes étant connues sous le nom de dérangements.

2. Procédé selon la revendication 1, **caractérisé en ce qu'**il comprend en outre une étape préalable de communication secrète de la permutation de bits (PE) à destination de l'entité réceptrice (100) et de l'entité émettrice (200).

3. Procédé de déchiffrement symétrique asynchrone sans chaînage d'un message chiffré selon le procédé de chiffrement de données mis en œuvre entre une entité émettrice (100) et une entité réceptrice (200) selon l'une quelconque des revendications 1 à 2, **caractérisé en ce qu'**il comprend les étapes suivantes :
- recevoir un bloc chiffré secondaire de 2 * m bits chiffré selon l'une quelconque des revendications 1 à 2, dans lequel la taille m des blocs chiffrés est un multiple de 2;
- appliquer une permutation inverse de bits (PI) sur le bloc chiffré secondaire ainsi reçu pour obtenir la dé-concaténation d'un masque aléatoire de m bits (MA) et d'un bloc chiffré primaire (CPV) de m bits ; et
- appliquer une opération OU exclusif (XOR) entre le bloc chiffré primaire (CPV) et le masque aléatoire (MA) ainsi dé-concaténés pour obtenir un bloc de données en clair (T) de m bits, la permutation inverse (PI) étant secrète, uniquement partagée et connue des entités émettrice (100) et réceptrice (200), et sensiblement sans point fixe, de telle permutations sans point fixes étant connues sous le nom de dérangements.

4. Système de chiffrement/déchiffrement symétrique asynchrone sans chaînage d'un message initial en clair (T) de N blocs successifs de m bits chacun de données brutes entre une entité émettrice (100) et une entité réceptrice (200), **caractérisé en ce que** l'entité émettrice (100) est adaptée pour
- générer un masque aléatoire (MA) de m bits ;
- appliquer une opération OU exclusif (XOR) entre un bloc de données brutes à chiffrer de m bits (T) et le masque aléatoire (MA) ainsi généré pour obtenir un bloc chiffré primaire (CPV) de m bits, dans lequel la taille m des blocs chiffrés est un multiple de 2 ;
- appliquer une permutation de bits (PE) sur la concaténation du masque aléatoire (MA) et du bloc chiffré primaire (CPV) pour obtenir un bloc chiffré secondaire de 2 * m bits (CS), tandis que l'entité réceptrice (200) est adaptée pour :
- recevoir le bloc chiffré secondaire de 2 * m bits ainsi chiffré (CS) en
- provenance de l'entité émettrice (100);
- appliquer une permutation inverse de bits (PI) sur le bloc chiffré secondaire
- (CS) ainsi reçu pour obtenir la dé-concaténation d'un masque aléatoire (MA) de m bits et d'un bloc chiffré primaire (CPV) de m bits ;
- appliquer une opération OU exclusif (XOR) entre le bloc chiffré primaire (CPV) et le masque aléatoire (MA) ainsi dé-concaténés pour obtenir un bloc de données en clair (T) de m bits, la permutation (PE) et sa permutation inverse (PI) étant secrètes, uniquement partagées et connues des entités émettrice (100) et réceptrice (200), et sensiblement sans point fixe, de telle permutations sans point fixes étant connues sous le nom de dérangements.

5. Système selon la revendication 4, **caractérisé en ce que** l'entité émettrice (100) et l'entité réceptrice (200) communiquent les données chiffrées secondaires (CS) entre elles à travers un canal de communication (400).

6. Système selon la revendication 4, **caractérisé en ce que** les données chiffrées secondaires (CS) conformément au procédé selon l'une des revendications 1 à 2, sont stockées dans une mémoire (300) volatile, non volatile ou analogue.

7. Système selon la revendication 4, **caractérisé en ce que** l'entité émettrice
et/ou réceptrice (100, 200) est du type comprenant des circuits logiques fixes ou programmables à base de transistors et diodes.

8. Support d'enregistrement de données **caractérisé en ce qu'**il comprend des instructions pour mettre en œuvre par un processeur le procédé de chiffrement et/ou le procédé de déchiffrement selon l'une quelconque des revendications 1 à 3 lorsque ledit programme d'ordinateur est exécuté par ledit processeur.

## Patentansprüche

1. Asynchrones symmetrisches Verschlüsselungsverfahren ohne Verkettung für eine ursprüngliche Klartextmitteilung (T) mit N aufeinanderfolgenden Blöcken von jeweils m Bits Rohdaten, das zwischen einer sendenden Entität (100) und einer empfangenden Entität (200) angewendet wird, **dadurch gekennzeichnet, dass** für jeden zu verschlüsselnden Block (T) von m Bits folgende Schritte vorgesehen sind:
- das Erzeugen einer Zufallsmaske (MA) mit m Bits, wobei die Größe m der zu verschlüsselnden Blöcke (T) ein Vielfaches von 2 ist;
- das Anwenden einer Exklusiv-ODER-Operation (XOR) zwischen dem zu verschlüsselnden Rohdatenblock (T) und der so generierten Zufallsmaske (MA), um einen primären verschlüsselten Block (CPV) von m Bits zu erhalten; und
- das Anwenden einer Bitpermutation (PE) auf die Verkettung der Zufallsmaske (MA) und des primären verschlüsselten Blocks (CPV), um einen sekundären verschlüsselten Block (CS) von 2*m Bits zu erhalten, wobei die Permutation (PE) geheim ist und nur von den sendenden (100) und empfangenden (200) Entitäten geteilt wird bzw. diesen Einheiten bekannt ist und im Wesentlichen keinen Fixpunkt hat, wobei solche Permutationen ohne Fixpunkt unter der Bezeichnung Störungen bekannt sind.

2. Verfahren nach Anspruch 1, **dadurch gekennzeichnet, dass** es außerdem vorab einen Schritt der geheimen Übermittlung der Bitpermutation (PE) an die empfangende Entität (100) und die sendende Entität (200) umfasst.

3. Asynchrones symmetrisches Entschlüsselungsverfahren einer verschlüsselten Mitteilung ohne Verkettung gemäß dem Datenverschlüsselungsverfahren, das zwischen einer sendenden Entität (100) und einer empfangenden Entität (200) nach einem der Ansprüche 1 bis 2 angewendet wird, **dadurch gekennzeichnet, dass** es folgende Schritte umfasst:
- das Empfangen eines sekundären verschlüsselten Blocks von 2*m Bit, der nach einem der Ansprüche 1 bis 2 verschlüsselt ist, wobei die Größe m der verschlüsselten Blöcke ein Vielfaches von 2 ist;
- das Anwenden einer Bitumkehrpermutation (PI) auf den so empfangenen sekundären verschlüsselten Block, um die Entkettung einer Zufallsmaske (MA) von m Bit von einem primären verschlüsselten Block (CPV) von m Bits zu erhalten; und
- das Anwenden einer Exklusiv-ODER-Operation (XOR) zwischen dem primären verschlüsselten Block (CPV) und der Zufallsmaske (MA), die so entkettet wurden, um einen Klartextdatenblock (T) von m Bits zu erhalten, wobei die Umkehrpermutation (PI) geheim ist und nur von den sendenden (100) und empfangenden (200) Entitäten geteilt wird bzw. diesen Einheiten bekannt ist und im Wesentlichen keinen Fixpunkt hat, wobei solche Permutationen ohne Fixpunkt unter der Bezeichnung Störung bekannt sind.

4. Asynchrones symmetrisches Verschlüsselungs-/Entschlüsselungssystem ohne Verkettung für eine ursprüngliche Klartextnachricht (T) mit N aufeinanderfolgenden Blöcken von jeweils m Bits Rohdaten zwischen einer sendenden Entität (100) und einer empfangenden Entität (200), **dadurch gekennzeichnet, dass** die sendende Entität (100) so ausgelegt ist,
- dass sie eine Zufallsmaske (MA) von m Bits generieren kann;
- das Anwenden einer Exklusiv-ODER-Operation (XOR) zwischen einem zu verschlüsselnden Rohdatenblock von m Bits (T) und der so generierten Zufallsmaske (MA), um einen primären verschlüsselten Block (CPV) von m Bits zu erhalten, wobei die Größe m der verschlüsselten Blöcke ein Vielfaches von 2 ist;
- das Anwenden einer Bitpermutation (PE) auf die Verkettung der Zufallsmaske (MA) und des primären verschlüsselten Blocks (CPV), um einen sekundären verschlüsselten Block von 2*m Bits (CS) zu erhalten, während die empfangende Entität (200) so ausgelegt ist, dass sie
- den so verschlüsselten, von der sendenden Entität (100) kommenden sekundären verschlüsselten Block von 2*m Bits (CS)
- empfangen kann;
- das Anwenden einer Bitumkehrpermutation (PI) auf den so erhaltenen sekundären verschlüsselten Block (CS),
- um die Entkettung einer Zufallsmaske (MA) von m Bits von einem primären verschlüsselten Block (CPV) von m Bits zu erhalten;
- das Anwenden einer Exklusiv-ODER-Operation (XOR) zwischen dem primären verschlüsselten Block (CPV) und der Zufallsmaske (MA), die so entkettet wurden, um einen Klartextdatenblock (T) von m Bits zu erhalten, wobei die Permutation (PE) und ihre Umkehrpermutation (PI) geheim sind und nur von den sendenden (100) und empfangenden (200) Entitäten geteilt werden bzw. diesen bekannt sind und im Wesentlichen keinen Fixpunkt haben, wobei solche Permutationen ohne Fixpunkt unter der Bezeichnung Störung bekannt sind.

5. System nach Anspruch 4, **dadurch gekennzeichnet, dass** die sendende Entität (100) und die empfangende Entität (200) die sekundär verschlüsselten Daten (CS) über einen Kommunikationskanal (400) untereinander übermitteln.

6. System nach Anspruch 4, **dadurch gekennzeichnet, dass** die gemäß dem Verfahren nach einem der Ansprüche 1 bis 2 verschlüsselten sekundären Daten (CS) in einem flüchtigen, nichtflüchtigen oder analogen Speicher (300) gespeichert werden.

7. System nach Anspruch 4, **dadurch gekennzeichnet, dass** die sendende und/oder empfangende Entität (100, 200) eine Entität ist, die feste oder programmierbare logische Schaltungen auf Basis von Transistoren und Dioden umfasst.

8. Datenaufzeichnungsmedium, **dadurch gekennzeichnet, dass** es Anweisungen umfasst, um das Verschlüsselungsverfahren und/oder das Entschlüsselungsverfahren nach einem der Ansprüche 1 bis 3 über einen Prozessor anzuwenden, wenn das Computerprogramm von diesem Prozessor ausgeführt wird.

## Claims

1. Asynchronous symmetrical encryption method without chaining of an initial plain text message (T) of N successive blocks of m bits each of raw data implemented between a sending entity (100) and a receiving entity (200), **characterised in that**, for each block (T) of m bits to be encrypted, the following steps are provided:
- generation of a random mask (MA) of m bits in which the size m of the blocks to be encrypted (T) is a multiple of 2;
- application of an exclusive OR (XOR) operation between the raw data block to be encrypted (T) and the random mask (MA) thus generated in order to obtain a primary cipher block (CPV) of m bits; and
- application of a bit permutation (PE) on the concatenation of the random mask (MA) and the primary cipher block (CPV) to obtain a secondary cipher block (CS) of 2*m bits, wherein the permutation (PE) is secret, uniquely shared and known to the sending (100) and receiving (200) entities and substantially without a fixed point, such permutations with no fixed points being known as derangements.

2. Method according to claim 1, **characterised in that** it furthermore comprises a prior step of secretly communicating the bit permutation (PE) intended for the receiving entity (100) and the sending entity (200).

3. Asynchronous symmetrical decryption method without chaining of an encrypted message according to the data encryption method implemented between a sending entity (100) and a receiving entity (200) according to any one of claims 1 to 2, **characterised in that** it comprises the following steps:
- receiving a secondary 2*m-bit cipher block encrypted according to any of claims 1 to 2, wherein the size m of the cipher blocks is a multiple of 2;
- applying an inverse bit permutation (PI) on the secondary cipher block thus received in order to obtain the de-concatenation of an m-bit random mask (MA) and an m-bit primary cipher block (CPV); and
- applying an exclusive OR (XOR) operation between the primary cipher block (CPV) and the random mask (MA) thus de-concatenated in order to obtain a plain text block (T) of m bits, wherein the reverse permutation (PI) is secret, only shared and known to the sending (100) and receiving (200) entities, and substantially without a fixed point, such permutations with no fixed points being known as derangements.

4. Asynchronous symmetrical encryption/decryption system without chaining of an initial plain text message (T) of N successive blocks of m bits each of raw data between a sending entity (100) and a receiving entity (200), **characterised in that** the sending entity (100) is designed to
- generate a random mask (MA) of m bits;
- apply an exclusive OR (XOR) operation between a raw data block to be encrypted of m bits (T) and the random mask (MA) thus generated in order to obtain a primary cipher block (CPV) of m bits, wherein the size m of the cipher blocks is a multiple of 2;
- apply a bit permutation (PE) on the concatenation of the random mask (MA) and the primary cipher block (CPV) to obtain a secondary cipher block (CS) of 2*m bits, whereas the permutation receiving entity (200) is designed to
- receive the secondary cipher block of 2 * m bits thus encrypted (CS)
- originating from the sending unit (100);
- apply an inverse bit permutation (PI) on the secondary cipher block
- (CS) thus received in order to obtain the de-concatenation of an m-bit random mask (MA) and an m-bit primary cipher block (CPV);
- apply an exclusive OR (XOR) operation between the primary cipher block (CPV) and the random mask (MA) thus de-concatenated in order to obtain a plain text block (T) of m bits, wherein the permutation (PE) and its reverse permutation (PI) are secret, only shared and known to the sending (100) and receiving (200) entities, and substantially without a fixed point, such permutations with no fixed points being known as derangements.

5. System according to claim 4, **characterised in that** the sending entity (100) and the receiving entity (200) mutually communicate the secondary encrypted data (CS) via a communication channel (400).

6. System according to claim 4, **characterised in that** the secondary encrypted data (CS) in accordance with the method according to any of claims 1 to 2 are stored in a volatile, non-volatile or analog memory (300).

7. System according to claim 4, **characterised in that** the sending and/or receiving entity (100, 200) is/are of the type comprising fixed or programmable transistor- and diode-based logic circuits.

8. Data recording medium, **characterised in that** it comprises instructions for implementing by a processor the encryption method and/or the decryption method according to any one of claims 1 to 3 when said computer program is run by said processor.
